# FASCICULE DE BREVET EUROPEEN

(11) **EP 3 685 064 B1**
(45) Date de publication et mention de la délivrance du brevet: **27.03.2024**
(21) Numéro de dépôt: 18779285.8
(22) Date de dépôt: 18.09.2018
(51) Int. Cl.: F16D 25/12, F16J 3/04, F16L 5/02, F16N 21/06

(54) **SOUFFLET DE PROTECTION POUR CARTER D'EMBRAYAGE DE VÉHICULE À MOTEUR SOUTENANT LE CONNECTEUR DE CONDUITE HYDRAULIQUE DE CYLINDRE RÉCEPTEUR D'EMBRAYAGE**
SCHUTZBÄLGE FÜR KUPPLUNGSGEHÄUSE EINES KRAFTFAHRZEUGS, DAS DEN HYDRAULIKANTRIEB EINES KUPPLUNGSNEHMERZYLINDERS TRÄGT
PROTECTIVE BELLOWS FOR THE CLUTCH HOUSING OF A MOTOR VEHICLE SUPPORTING THE HYDRAULIC DRIVE CONNECTOR OF A CLUTCH SLAVE CYLINDER

(30) Priorité: 19.09.2017 IN 201711033105
(43) Date de publication de la demande: 29.07.2020
(73) Titulaire: Renault s.a.s, 92100 Boulogne Billancourt (FR)
(72) Inventeur: NEAGU, Madalin, Buzau (RO); PANEER-SELVAM, Vetri-Selvan, Thanjavur 614904 (IN)
(74) Mandataire: Renault Group
(86) Numéro de dépôt international: PCT/EP2018/075241
(87) Numéro de publication internationale: WO 2019/057728

(56) Documents cités:
- DE-A1- 19 808 315
- DE-U1- 29 609 288
- JP-A- 2008 234 904
- JP-U- H0 557 455

## Description

La présente invention concerne le système de commande des embrayages de véhicules à moteur.

Plus précisément, elle concerne différentes solutions techniques de commande d'embrayage, qu'elles soient du type à cylindre récepteur concentrique (CSC) ou du type à fourchette de débrayage.

Dans les commandes d'embrayage du type à fourchette de débrayage, la fourchette de débrayage constitue un levier qui actionne la butée de débrayage et qui actionne ainsi le mécanisme d'embrayage.

Dans le type à cylindre récepteur concentrique (CSC), un fluide hydraulique délivré par un émetteur agit sur une butée de débrayage. Pour les deux types de commande d'embrayage, deux versions de carter d'embrayage sont actuellement utilisées. Une première version comporte une fenêtre de sortie pour la fourchette de débrayage. Une seconde version comprend un trou de sortie circulaire permettant le passage d'une pipette flexible reliée à un tuyau d'alimentation en fluide hydraulique, et agissant sur la butée de débrayage.

Chacune de ces ouvertures nécessite un soufflet de protection approprié.

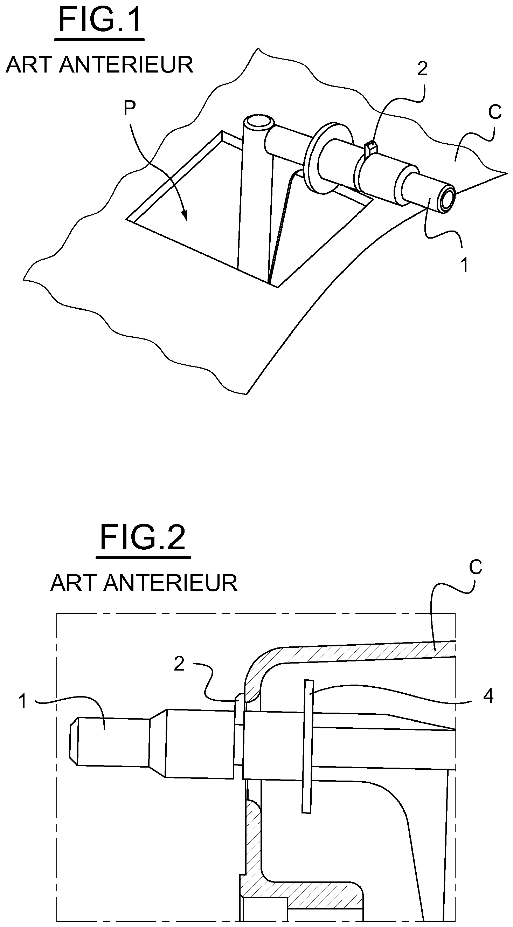

L'emploi de deux types de carters pour les deux types de commande d'embrayage est problématique pour la standardisation de certaines pièces brutes des carters d'embrayage. Par exemple, comme montré sur la figure 1, qui représente le passage d'une pipette 1 dans un passage P formé dans le carter, le jeu entre la pipette et les bords de la fenêtre de sortie de fourchette est relativement grand. On comprend que lorsque l'opérateur branche la conduite d'alimentation de la pipette, celle-ci subit une flexion importante due au déplacement permis par la taille de la fenêtre de sortie, qui peut aller jusqu'à la rupture.

Le problème de flexion excessive de la pipette flexible 1 est résolu en plaçant un taquet 2 sur la pipette 1 qui prend appui sur le carter C pour supporter les efforts. En référence à la figure 2, la fermeture de la fenêtre du carter d'embrayage C est obtenue par une rondelle de protection 4 placée sur la pipette.

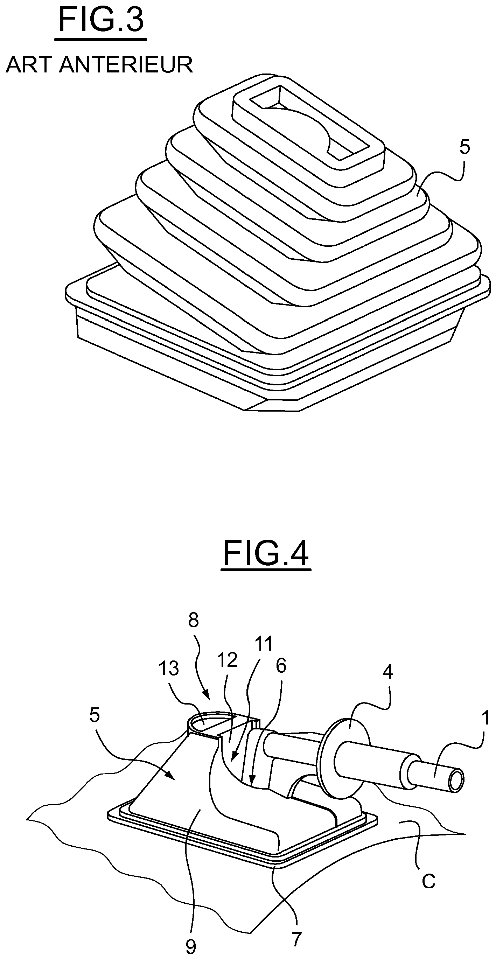

La protection des composants internes du boîtier est assurée dans le type de commande d'embrayage à fourchette de débrayage par un soufflet de protection approprié (figure 3).

JP H05 57455 U et DE 296 09 288 U1 décrivent d'autres exemples de soufflet de protection de l'art antérieur.

Au vu de ce qui précède, l'invention propose une solution aux inconvénients de l'art antérieur et, en particulier, elle propose de réduire ou d'éliminer le risque de rupture de la pipette pendant sa connexion et de fermer la fenêtre de passage formée dans le carter.

L'invention concerne par conséquent un soufflet de protection pour carter d'embrayage, selon la revendication 1.

La zone de renforcement peut comprendre une face axiale. Elle s'étend de préférence vers le haut, une de ses surfaces étant substantiellement verticale.

Selon une caractéristique de l'invention, le soufflet de protection comprend en outre une partie flexible opposée à la zone de renforcement, apte à être déformée pendant le montage de la pipette à travers l'ouverture du soufflet.

Selon un mode de réalisation, l'ouverture est réalisée en coupant partiellement la partie flexible.

Selon un autre mode de réalisation, l'ouverture est formée en coupant partiellement le bord de base du soufflet et la partie flexible.

D'autres avantages et caractéristiques de la présente invention apparaîtront à la lecture de la description détaillée de modes de réalisation, qui ne sont en aucun cas limitatifs, et des dessins annexés, dans lesquels :
- la figure 1 montre une illustration en 3D de l'état de la technique,
- la figure 2 montre une coupe transversale d'une pipette flexible dans un carter d'embrayage selon l'état de la technique,
- la figure 3 est une illustration d'un soufflet de protection selon l'état de la technique,
- la figure 4 est une illustration d'un soufflet de protection selon la présente invention,
- les figures 5A à 5D représentent le montage d'un soufflet de protection selon la présente invention sur un carter d'embrayage,
- la figure 6 est une vue en coupe d'un soufflet de protection en contact avec une pipette flexible, montrant comment le côté renforcé soutient la pipette, et
- la figure 7 est une vue de dessus d'un soufflet de protection selon la présente invention.

Il est maintenant fait référence à la figure 4 qui représente un soufflet de protection 5 selon un mode de réalisation de la présente invention.

Le soufflet de protection 5 montré sur la figure 4 est monté sur le carter d'embrayage de la même manière que le soufflet du type d'embrayage à fourchette de débrayage de l'art antérieur montré sur la figure 3. Le soufflet de protection 5 comprend un corps 9 ayant une base 7, ici carrée ou rectangulaire, par laquelle le soufflet 5 peut être monté sur un carter d'embrayage C et une région d'extrémité 8 à l'opposé de la base 7.

Par exemple, la base 7 comporte une gorge périphérique dans laquelle s'engage le bord de l'ouverture du carter pendant l'assemblage.

L'ensemble est constitué d'un matériau élastiquement déformable, par exemple du caoutchouc ou un élastomère comme de l'EPDM (monomère d'éthylène, propylène, diène) ayant une épaisseur qui confère au soufflet 5 une souplesse suffisante pour permettre sa déformation et pour faciliter son montage.

Le soufflet comprend en outre une ouverture 6 formée dans la région d'extrémité 8 pour permettre le passage d'une pipette flexible 1 connectée de façon hydraulique à un tuyau d'alimentation en fluide hydraulique (non représenté). Cette ouverture s'étend substantiellement axialement et est dimensionnée de façon à permettre le déplacement de la pipette pendant le raccordement.

A l'arrière de l'ouverture, c'est-à-dire du côté opposé à l'extrémité de connexion de la pipette 1, le soufflet comprend une zone renforcée 11 qui prend appui sur la pipette 1.

La zone renforcée 11 constitue ainsi une butée limitant le mouvement vers l'arrière de la pipette, ce qui prévient tout risque de rupture par déformation excessive.

Le soufflet ferme l'ouverture du carter et apporte une fonction de protection en supportant la pipette.

Dans un mode de réalisation, la zone renforcée, qui a une rigidité augmentée, est obtenue en plaçant une zone solide dans le soufflet, ce qui donne au soufflet une rigidité augmentée dans cette zone.

Selon l'invention, dans la zone renforcée 11, le soufflet de protection comprend une face relativement rigide 12 surélevée axialement de la base 7 à l'extrémité 8 de manière à constituer une butée pour la pipette.

A l'inverse, à l'avant, vers l'extrémité de connexion de la pipette, le soufflet est flexible afin de pouvoir être déformé au cours de son montage autour de la pipette 1.

Ce mode de réalisation a comme avantage de permettre d'obtenir un seul produit dont la production est économique.

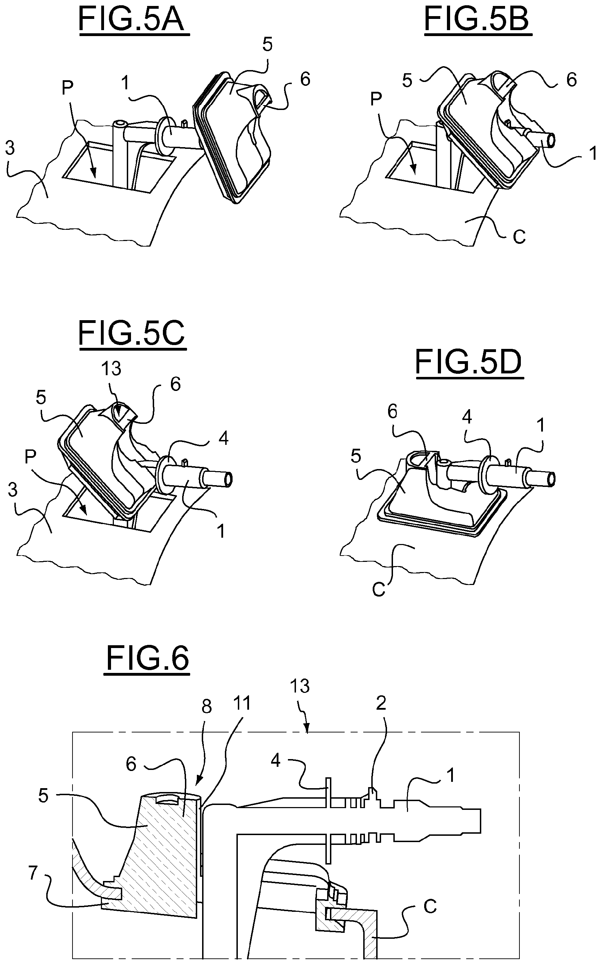

Pendant le montage, l'opérateur passe le soufflet de protection 5 autour de la pipette flexible 1 dans un mouvement de translation et de rotation montré à quatre instants successifs sur les figures 5A à 5D. Pendant la dernière phase, on monte la partie souple de la base 7 du soufflet sur un bord de l'ouverture du carter, ce qui permet d'obtenir un ensemble étanche, le soufflet est donc monté de manière hermétique sur le carter.

Une fois monté sur le carter, comme on peut le voir sur la figure 5D, il n'y a pas de contact entre la pipette flexible 1 et la zone renforcée 11 du soufflet, sauf lorsque la pipette est courbée, ce qui réduit avantageusement les bruits, les vibrations et les secousses.

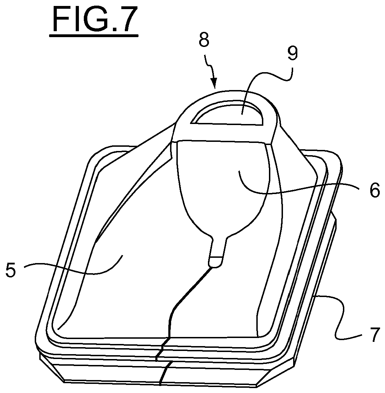

Dans un mode de réalisation montré sur la figure 7, le soufflet de protection peut être pourvu d'une découpe allant de l'ouverture 6 au bord du soufflet.

## Revendications

1. Soufflet de protection (5) pour carter d'embrayage (C) comprenant une base (7) destinée à être montée sur une fenêtre de sortie du carter d'embrayage (C), et une ouverture (6), formée dans une région d'extrémité (8) à l'opposé de la base (7), permettant le passage d'une pipette flexible (1), ledit soufflet comprend
- une zone de renforcement (11) adaptée pour limiter la flexion de ladite pipette pendant la connexion avec un tuyau d'alimentation hydraulique,
- et une partie flexible opposée à la zone de renforcement, (11), apte à être déformée pendant le montage de la pipette (1) à travers l'ouverture (6) du soufflet,
**caractérisé en ce que** la zone de renforcement (11) comprend une face rigide (12) surélevée axialement de la base (7) à la région d'extrémité (8) de manière à constituer une butée pour la pipette.

2. Soufflet de protection selon la revendication 1, dans lequel la zone de renforcement (11) comprend une face axiale.

3. Soufflet de protection selon la revendication 3, dans lequel l'ouverture (6) est réalisée en coupant partiellement la partie flexible.

4. Soufflet de protection selon la revendication 1, dans lequel l'ouverture (6) est formée en coupant partiellement le bord de base du soufflet (5) et la partie flexible.

5. Dispositif de commande d'embrayage hydraulique comprenant une conduite d'alimentation en fluide sous pression connectée à une pipette flexible (1), **caractérisé en ce qu'**il comprend un soufflet de protection (5) selon l'une quelconque des revendications qui précèdent.

## Patentansprüche

1. Schutzbalg (5) für ein Kupplungsgehäuse (C), der eine Basis (7) aufweist, die dazu bestimmt ist, an einem Auslassfenster des Kupplungsgehäuses (C) montiert zu werden, sowie eine Öffnung (6), die in einem Endbereich (8) gegenüber der Basis (7) ausgebildet ist und den Durchgang einer flexiblen Pipette (1) ermöglicht, wobei der Balg Folgendes aufweist:
- einen Verstärkungsbereich (11), der ausgeführt ist, die Biegung der Pipette während der Verbindung mit einem hydraulischen Versorgungsschlauch zu begrenzen,
- und einen flexiblen Teil, der dem Verstärkungsbereich (11) gegenüber liegt und geeignet ist, während der Montage der Pipette (1) durch die Öffnung (6) des Balgs verformt zu werden, **dadurch gekennzeichnet, dass** der Verstärkungsbereich (11) eine starre Fläche (12) aufweist, die von der Basis (7) bis zum Endbereich (8) axial erhöht ist, um einen Anschlag für die Pipette zu bilden.

2. Schutzbalg nach Anspruch 1, wobei der Verstärkungsbereich (11) eine axiale Fläche aufweist.

3. Schutzbalg nach Anspruch 3, wobei die Öffnung (6) durch teilweises Abschneiden des flexiblen Teils hergestellt wird.

4. Schutzbalg nach Anspruch 1, wobei die Öffnung (6) durch teilweises Abschneiden der Basiskante des Balgs (5) und des flexiblen Teils gebildet wird.

5. Hydraulische Kupplungsbetätigungsvorrichtung, die eine Druckflüssigkeit-Zuführleitung aufweist, die an eine flexible Pipette (1) angeschlossen ist, **dadurch gekennzeichnet, dass** sie einen Schutzbalg (5) nach einem der vorstehenden Ansprüche aufweist.

## Claims

1. Protective bellows (5) for a clutch housing (C) comprising a base (7) intended to be mounted on an exit window of the clutch housing (C), and an opening (6) formed in an end region (8) opposite the base (7) enabling the passage of a flexible pipette (1), said bellows comprises:
- a reinforcement zone (11) designed to limit the bending of said pipette during connection with a hydraulic supply pipe,
- and a flexible portion opposite the reinforcement zone (11) designed to be deformed during assembly of the pipette (1) through the opening (6) of the bellows,
**characterized in that** the reinforcement zone (11) comprises a rigid face (12) raised axially from the base (7) in the end region (8) to form a stop for the pipette.

2. Protective bellows according to Claim 1, in which the reinforcement zone (11) comprises an axial face.

3. Protective bellows according to Claim 3, in which the opening (6) is formed by partially cutting the flexible portion.

4. Protective bellows according to Claim 1, in which the opening (6) is formed by partially cutting the base edge of the bellows (5) and the flexible portion.

5. Hydraulic clutch control device comprising a pressurized fluid supply line connected to a flexible pipette (1), **characterized in that** it comprises a protective bellows (5) according to any one of the preceding claims.
